# EUROPEAN PATENT APPLICATION

(11) **EP 4 060 002 A1**
(43) Date of publication of application: **21.09.2022**
(21) Application number: 21162883.9
(22) Date of filing: 16.03.2021
(51) Int. Cl.: C09D 5/00, C09D 7/63, C09D 163/04, C08K 5/20

(54) **A COATING COMPOSITION**

(71) Applicant: PPG Coatings Europe B.V., 1047 BB Amsterdam (NL)
(72) Inventor: VELLINGA, Arjen, 1098LV Amsterdam (NL); HAPPE, Willem Johannes, 1507TK Zaandam (NL); VAN VLIET, Cornelis Hubertus, 1421TK Uithoorn (NL); NEDERLOF, Arnold Johan, 2071VC Santpoort-Noord (NL)
(74) Representative: Appleyard Lees IP LLP

(57) **Abstract**

Use of a rheological agent in a coating composition to enhance chemical resistance of a coating layer formed by the coating composition when coated on at least a portion of a substrate, wherein the rheological agent comprises at least 85 wt% of a compound having a melting temperature of greater than 95°C.

## Description

### Field of the Invention

The present invention relates to the use of a rheological agent in a coating composition to enhance chemical resistance to a coating layer formed by the coating composition, such as when the coating layer is coated on at least a portion of a substrate, such as a steel substrate, such as a tank or pipe. The invention also relates to a substrate, such as a tank or pipe, having such a coating layer applied to at least a portion of a surface (such as an internal surface), and a method of producing such a coated substrate, such as a tank or pipe. The invention also relates to a coating composition which may be applied to at least a portion of a substrate, such as a tank or pipe.

### Background of the Invention

Containers and processing equipment used in processing, storing, handling and/or transporting products such as chemicals and/or solvents in the chemical storage and transport industry will commonly comprise coating compositions applied to the internal surfaces to provide protection thereto. Such containers and processing equipment may include pipe internals, on- and offshore storage tanks, ship tanks, potable water tanks, ballast tanks etc.

The coating compositions applied to internal surfaces of containers and processing equipment are often formed from organic or inorganic materials such as epoxy-, silicate-, polyurea, polyurethane, vinyl ester, polyolefin systems or combinations of such technologies. The coated surfaces will commonly be formed of steel. During use, the coated surfaces face long term exposure to the liquid phase or vapour phase of a wide range of crude or refined products or chemicals, such as acids, alkaline, oils, fats, solvents (such as alcohols, ketones, ethers, hydrogenated hydrocarbons), and water.

In order to function effectively in a wide range of applications, such as for suitability as chemical tank coatings for use with a wide range of cargoes, the coating compositions are subject to a demanding and complex set of specifications. Such specifications include operational efficiency (quick change of cargoes, short recovery time, early water washing), increasing cargo temperatures (to enhance pumpability of viscous cargoes), higher levels of aggressive contaminations (alkaline/acid conditions etc), and cargo/water flushing sequences put high demands on tank coating performance and lifetime.

### Summary of the Invention

According to the present invention, there is provided a use of a rheological agent in a coating composition to enhance chemical resistance of a coating layer formed by the coating composition when coated on at least a portion of a substrate, wherein the rheological agent comprises at least 85 wt% of a compound having a melting temperature of greater than 95°C.

There is also provided a coating composition comprising a rheological agent, wherein the rheological agent comprises at least 85 wt% of a compound having a melting temperature of greater than 95°C.

There is also provided a substrate, wherein at least a portion of the substrate is coated with a coating layer formed by applying to the substrate a coating composition as described herein.

There is also provided a tank or pipe, wherein at least a portion of an internal surface of the tank or pipe is coated with a coating layer formed by applying to the substrate a coating composition as described herein.

There is also provided a method of producing a substrate coated on at least a portion thereof with a coating layer, the method comprising the steps of:
(a) providing a coating composition as described herein; and
(b) applying the composition to at least a portion of a substrate to form a coating layer.

### Detailed Description of the Invention

According to the present invention there is provided a use of a rheological agent in a coating composition to enhance chemical resistance of a coating layer formed by the coating composition when coated on at least a portion of a substrate, wherein the rheological agent comprises at least 85 wt% of a compound having a melting temperature of greater than 95°C.

The reference to "at least 85 wt% of a compound having a melting temperature of greater than 95°C" means at least 85 wt% based on the total weight of the rheological agent.

As used herein "rheological agent" means an additive which modifies the rheology of a coating composition in which the agent is included. The rheological agent of the present invention may comprise a thixotropic agent. As used herein "thixotropic agent" means an additive which imparts thixotropic properties to a coating composition in which the agent is included.

Rheological agents may provide coating layers with sag resistance (also known as hold-up of the wet coating layer on a vertical substrate) and prevent the settling of particles such as pigments in a coating composition (such as during storage of the coating composition). It has surprisingly been found that rheological agents play a significant role in the chemical resistance of coatings coated (as layers) onto substrates such as steel surfaces. In particular, it has been found that rheological agents having particular melting profiles may be used to advantageously enhance or increase the chemical resistance of coatings against chemicals such as fatty acids (particularly hot chemicals, such as fatty acids) and/or against organic solvents (such as aggressive organic solvents).

Accordingly, by enhancing chemical resistance, the rheological agents may provide coated substrates with improved lifetime expectancy, robustness, operational efficiency (reduced coating reconditioning between cargoes, reduced ventilation times, less stringent restrictions in service), acceptance of higher cargo temperatures, and increased cargo versatility.

References herein to "a coating layer formed by the coating composition when coated on at least a portion of a substrate" refer to a coating layer that is coated onto the substrate at a suitable thickness.

References herein to "enhancing chemical resistance" of a coating layer mean that when the coating layer comprises the rheological agent, the coating layer has chemical resistance as determined below, wherein the chemical resistance may be increased compared to a coating layer formed by an identical coating composition without a rheological agent as defined herein (i.e. without any rheological agent or comprising a rheological agent that is not as defined herein).

As reported herein, the chemical resistance of a coating (such as applied to a substrate as a layer) against a chemical was determined in accordance with ISO 2812-1:2007. The use of a rheological agent as described herein may provide chemical resistance to a coating as determined in accordance with ISO 2812-1:2007.

The chemical resistance of a coating layer against continuous exposure to a chemical may be determined by immersing a panel comprising the coating layer into a chemical continuously for a duration of 6 months. At fixed intervals (such as every month) the coating layer is inspected for defects. The chemical resistance of a coating layer against repeated cycling of chemicals may be determined by exposing a panel comprising the coating layer intermittently to chemicals and inspecting the coating layer for defects. The coating layer may be immersed in a first chemical for 3 weeks, followed by immersion in water for 3 weeks, and repeating this cycle at least 10 times. Alternatively, the coating layer may be immersed in a first chemical for a period of 7 days, washed with water, immersed in a second chemical for 7 days, washed with water, and this cycle may be repeated at least 10 times.

Defects in the coating layer include blistering, cracking, swelling, delamination, softening, discoloration, loss of adhesion, and under-film corrosion. The degree of blistering may be assessed by examining the size and number of the blisters, such as the number of blisters having a size in the range of from 0.5 to 2 mm, the number of blisters having a size in the range of from 2 to 5 mm, and the number of blisters having a size in the range of from 5 to 10 mm. As reported herein, the degree of blistering was determined in accordance with ISO4628-2:2016.

The coating layer may be considered to have chemical resistance against a chemical if the coating layer remains intact after exposure to (i.e. contact with) the chemical. As used herein "intact" means that the coating layer is free of structural defects such as blistering, cracking, swelling, and delamination. Structural defects in the coating layer cause a loss of coating integrity and may lead to contact between the chemical and the substrate.

The rheological agent may enhance chemical resistance of the coating layer against any known chemical, whether liquid, semi-solid or solid. The chemical may be liquid. The chemical may be a chemical cargo. The chemical may comprise an acid (such as an organic acid or inorganic acid), alkaline, oil, fat, solvent (such as alcohol, ketone, ether, hydrogenated hydrocarbon), and water.

The rheological agent may enhance chemical resistance of the coating layer against long term exposure to, and/or repeated cycling of, a chemical.

As used herein "long term exposure" means continuous exposure to one or more chemicals for a total period of time of at least 6 months, such as at least 9 months, such as at least 12 months, such as at least 2, 3, 4 or 5 years.

The rheological agent may enhance chemical resistance of the coating layer against continuous exposure to a chemical for a total of at least 6 months, such as at least 9 months, such as at least 12 months. In other words, the rheological agent may enhance chemical resistance of the coating layer such that the coating layer remains intact after a total of at least 6 months, such as at least 9 months, such as at least 12 months, of continuous exposure to a chemical.

As used herein "repeated cycling of chemicals" means that the coating layer is intermittently exposed to or contacted with more than one chemical.

The rheological agent may provide chemical resistance to the coating layer against repeated cycling of at least 2 different chemicals.

The rheological agent may enhance chemical resistance of the coating layer against an organic solvent, such as alcohols, ketones, ethers, and hydrogenated hydrocarbons. The rheological agent may enhance chemical resistance of the coating layer against an alcohol, such as methanol, ethanol, or propanol. The rheological agent may enhance chemical resistance of the coating layer against methanol.

The rheological agent may enhance chemical resistance of the coating layer against a fatty acid. The fatty acid may be derived from vegetable oils, such as palm oil. The rheological agent may enhance chemical resistance of the coating layer against palm fatty acid distillate (PFAD). PFAD is a waste stream from the palm oil industry and is an aggressive cargo for epoxy-based coating systems. It consists of free fatty acids varying in molecular weight and contains a fraction of unsaturated fatty acid. PFAD can alternatively be prepared from separate fatty acids: lauric acid 0.1 wt%, myristic acid 0.5 wt%, palmitic acid 48 wt%, stearic acid 4.2 wt%, oleic acid 37.2 wt%, linoleic acid 9.6 wt% and linolenic acid 0.4 wt%. These fatty acids can be obtained from Acros Organics/Fisher Scientific.

The rheological agent may enhance chemical resistance to the coating against an organic solvent, such as methanol, and against a fatty acid, such as palm fatty acid distillate (PFAD).

The rheological agent may enhance chemical resistance of the coating layer by providing chemical resistance to the coating layer against a fatty acid, such as palm fatty acid distillate (PFAD), and/or against an organic solvent, such as methanol.

The rheological agent may enhance chemical resistance of the coating layer by providing chemical resistance to the coating layer against a fatty acid, such as palm fatty acid distillate (PFAD), and against an organic solvent, such as methanol.

Elevated temperatures are often used for loading/off-loading of chemical cargoes to improve the pumpability and speed of loading/off-loading. The temperature range depends on the type of cargo, such as to achieve a suitable viscosity of the cargo. The present invention may enhance chemical resistance of the coating layer over a range of elevated operating temperatures.

The rheological agent may enhance chemical resistance of the coating layer against a chemical at a temperature of at least 40°C, such as at least 50°C, such as at least 60°C. The rheological agent may enhance chemical resistance of the coating layer against an organic solvent, such as methanol, at a temperature of at least 40°C. The rheological agent may enhance chemical resistance of the coating layer against a fatty acid, such as PFAD, at a temperature of at least 60°C, such as at least 70°C, such as at a temperature of 80°C.

The rheological agent may enhance chemical resistance of the coating layer by providing chemical resistance against a fatty acid at a temperature of at least 60°C and/or against an organic solvent at a temperature of at least 40°C.

The rheological agent may enhance chemical resistance of the coating layer by providing chemical resistance against a fatty acid at a temperature of at least 60°C and against an organic solvent at a temperature of at least 40°C.

The rheological agent may enhance chemical resistance of the coating layer against continuous exposure to an organic solvent, such as methanol, at a temperature of at least 40°C for a total of at least 6 months, such as at least 9 months, such as at least 12 months. The rheological agent may enhance chemical resistance of the coating layer against continuous exposure to a fatty acid, such as PFAD, at a temperature of at least 60°C for a total of at least 6 months, such as at least 9 months, such as at least 12 months. The rheological agent may enhance chemical resistance of the coating layer against continuous exposure to PFAD at a temperature of at least 70°C for a total of at least 6 months, such as at least 9 months, such as at least 12 months.

The rheological agent may provide enhanced chemical resistance of the coating layer compared to a coating layer comprising castor oil and/or hydrogenated castor oil (i.e. in place of the rheological agent). The rheological agent may provide enhanced chemical resistance of the coating layer against a fatty acid, such as PFAD, compared to a coating layer comprising castor oil and/or hydrogenated castor oil. A coating layer as defined herein may have enhanced chemical resistance if it remains intact for a greater length of time compared to a coating layer comprising castor oil and/or hydrogenated castor oil.

The rheological agent of use in the present invention comprises at least 85 wt% of a compound having a melting temperature of greater than 95°C, such as greater than 105°C, such as greater than 115°C.

The rheological agent of use in the present invention comprises at least 85 wt%, such as at least 87 wt%, such as at least 90 wt%, or even at least 94 wt%, of a compound having a melting temperature of greater than 95°C.

The rheological agent of use in the present invention comprises at least 85 wt%, such as at least 87 wt%, such as at least 90 wt%, or even at least 94 wt%, of a compound having a melting temperature of greater than 95°C, such as greater than 105°C, such as greater than 115°C.

As used herein "melting temperature" means the temperature at which the compound completely melts. As reported herein, the melting temperature was measured using Differential Scanning Calorimetry.

The rheological agent may comprise more than one compound. The compound having a melting temperature of greater than 95°C may comprise an organic compound. As used herein "organic compound" means a compound comprising a carbon-hydrogen bond. The compound having a melting temperature of greater than 95°C may comprise a compound comprising at least two amide groups, such as a diamide or a polyamide. The compound comprising at least two amide groups may comprise a diamide.

The rheological agent may consist of a diamide, wherein at least 85 wt% of the diamides have a melting temperature of greater than 95°C, such as greater than 105°C, such as greater than 115°C.

The rheological agent may consist of a diamide, wherein at least 85 wt%, such as at least 87 wt%, such as at least 90 wt%, or even at least 94 wt% of the diamides have a melting temperature of greater than 95°C.

The rheological agent may consist of a diamide, wherein at least 85 wt%, such as at least 87 wt%, such as at least 90 wt%, or even at least 94 wt% of the diamides have a melting temperature of greater than 95°C, such as greater than 105°C, such as greater than 115°C.

A commercially available diamide-based rheological agent may comprise Crayvallac(RTM) Ultra, Crayvallac(RTM) Super, Crayvallac(RTM) LV, Crayvallac(RTM) Optima and Crayvallac(RTM) PA3X20 from Arkema, BYK-405 and BYK-430 from BYK Altana Group, Luvotix(RTM) HP, Luvotix(RTM) AB, Luvotix(RTM) PA20XA, Luvotix(RTM) LT10, Luvotix(RTM) SAB, Luvotix(RTM) PAB and Luvotix(RTM) SHP from Lehmann & Voss, Thixatrol(RTM) MAX, Thixatrol(RTM) PRO, Thixatrol(RTM) PM8054, Thixatrol(RTM) PM8056 and Thixatrol(RTM) PM8058 from Elementis, Iscathix(RTM) SR from ISCA, Keperrhe(RTM)-400 from Kito Chemicals, Disparlon(RTM) 6300, Disparlon(RTM) 6500, Disparlon(RTM) 6700 and Disparlon(RTM) 6900 20X from Kusumoto Chemicals, and/or Flownon RCM-210 from Kyoeisha Chemicals.

The diamide may comprise a compound of the formula (I):

R₁-CONH-X₁-NHCO-R₂ (I)

wherein X₁ is a hydrocarbylene group; and
R₁ and R₂ are each independently a hydrocarbyl group which is optionally substituted by a hydroxyl group.

The diamide may comprise a compound of the formula (II):

R₃-NHCO-X₂-NHCO-R₄ (II)

wherein X₂ is a hydrocarbylene group; and
R₃ and R₄ are each independently a hydrocarbyl group which is optionally substituted by a hydroxyl group.

The diamide may comprise a compound of the formula (III):

R₅-NHCO-X₃-CONH-R₆ (III)

wherein X₃ is a hydrocarbylene group; and
R₅ and R₆ are each independently a hydrocarbyl group which is optionally substituted by a hydroxyl group.

The diamide may comprise a mixture of compounds of the formulae (I), (II) and (III). The diamide may comprise a compound of the formula (I).

The compound of the formula (I) may be obtained by reacting a diamine of the formula H₂N-X₁-NH₂ with carboxylic acids of the formulae R₁-COOH and R₂-COOH, wherein X₁, R₁ and R₂ are as defined above.

The compound of formula (II) may be obtained by reacting an amino acid of the formula HOOC-X₂-NH₂ with an amine of the formula R₃-NH₂ and a carboxylic acid of the formula R₄-COOH, wherein X₂, R₃ and R₄ are as defined above.

The compound of formula (III) may be obtained by reacting a dicarboxylic acid of the formula HOOC-X₃-COOH with amines of the formulae R₅-NH and R₆-NH, wherein X₃, R₅ and R₆ are as defined above.

X₁ as defined herein may be an alkylene, alkenylene, arylene, aralkylene, or alkaralkylene group. X₁ may comprise from 1 to 20, such as from 1 to 10, such as from 1 to 8 carbon atoms. X₁ may be a C₁-C₂₀ alkylene, C₂-C₂₀ alkenylene, C₆-C₂₀ arylene, C₇-C₂₀ aralkylene, or C₈-C₂₀ alkaralkylene group. X₁ may represent a straight-chain C₁-C₈ alkylene group or a C₈ alkaralkylene group. X₁ may be 1,2-ethylene, 1,6-hexylene, or 1,3-xylylene.

R₁ and R₂ as defined herein may each independently be an alkyl, alkenyl, aryl, aralkyl, or alkaralkyl group which is optionally substituted by a hydroxyl group, such as one hydroxyl group. R₁ and R₂ may each independently comprise from 1 to 20, such as from 10 to 20, such as from 16 to 18 carbon atoms. R₁ and R₂ may each independently represent a straight-chain C₁₀-C₂₀ alkyl group, a straight-chain C₁₀-C₂₀ hydroxyalkyl group, a straight-chain C₁₀-C₂₀ alkenyl group, or a straight-chain C₁₀-C₂₀ hydroxyalkenyl group. R₁ and R₂ may independently be n-decyl, n-hexadecyl, n-octadecyl, or 12-hydroxy-n-octadecyl.

X₂ as defined herein may be an alkylene, alkenylene, arylene, aralkylene, or alkaralkylene group. X₂ may comprise from 1 to 20, such as from 1 to 10, such as from 1 to 8 carbon atoms. X₂ may be a C₁-C₂₀ alkylene, C₂-C₂₀ alkenylene, C₆-C₂₀ arylene, C₇-C₂₀ aralkylene, or C₈-C₂₀ alkaralkylene group. X₂ may represent a straight-chain C₁-C₈ alkylene group or a C₈ alkaralkylene group. X₂ may be 1,2-ethylene, 1,6-hexylene, or 1,3-xylylene.

R₃ and R₄ as defined herein may each independently be an alkyl, alkenyl, aryl, aralkyl, or alkaralkyl group which is optionally substituted by a hydroxyl group, such as one hydroxyl group. R₃ and R₄ may each independently comprise from 1 to 20, such as from 10 to 20, such as from 16 to 18 carbon atoms. R₃ and R₄ may each independently represent a straight-chain C₁₀-C₂₀ alkyl group, a straight-chain C₁₀-C₂₀ hydroxyalkyl group, a straight-chain C₁₀-C₂₀ alkenyl group, or a straight-chain C₁₀-C₂₀ hydroxyalkenyl group. R₃ and R₄ may independently be n-decyl, n-hexadecyl, n-octadecyl, or 12-hydroxy-n-octadecyl.

X₃ as defined herein may be an alkylene, alkenylene, arylene, aralkylene, or alkaralkylene group. X₃ may comprise from 1 to 20, such as from 1 to 10, such as from 1 to 8 carbon atoms. X₃ may be a C₁-C₂₀ alkylene, C₂-C₂₀ alkenylene, C₆-C₂₀ arylene, C₇-C₂₀ aralkylene, or C₈-C₂₀ alkaralkylene group. X₃ may represent a straight-chain C₁-C₈ alkylene group or a C₈ alkaralkylene group. X₃ may be 1,2-ethylene, 1,6-hexylene, or 1,3-xylylene.

R₅ and R₆ as defined herein may each independently be an alkyl, alkenyl, aryl, aralkyl, or alkaralkyl group which is optionally substituted by a hydroxyl group, such as one hydroxyl group. R₅ and R₆ may each independently comprise from 1 to 20, such as from 10 to 20, such as from 16 to 18 carbon atoms. R₅ and R₆ may each independently represent a straight-chain C₁₀-C₂₀ alkyl group, a straight-chain C₁₀-C₂₀ hydroxyalkyl group, a straight-chain C₁₀-C₂₀ alkenyl group, or a straight-chain C₁₀-C₂₀ hydroxyalkenyl group. R₅ and R₆ may independently be n-decyl, n-hexadecyl, n-octadecyl, or 12-hydroxy-n-octadecyl.

The term "alk" or "alkyl", as used herein unless otherwise defined, relates to saturated hydrocarbon radicals which are straight, branched, cyclic or polycyclic moieties or combinations thereof and may contain from 1 to 20 carbon atoms, such as from 1 to 10 carbon atoms, such as from 1 to 8 carbon atoms, such as from 1 to 6 carbon atoms, or even from 1 to 4 carbon atoms. These radicals may be optionally substituted with a chloro, bromo, iodo, cyano, nitro, -OR¹⁹, -OC(O)R²⁰, -C(O)R²¹, -C(O)OR²², -NR²³R²⁴, -C(O)NR²⁵R²⁶, -SR²⁷, -C(O)SR²⁷,-C(S)NR²⁵R²⁶, aryl or Het substituent, wherein R¹⁹ to R²⁷ each independently represent hydrogen, aryl or alkyl, and/or be interrupted by a oxygen or sulphur atom, or by silano or dialkylsiloxane group. Such radicals may be independently selected from methyl, ethyl, n-propyl, isopropyl, n-butyl, isobutyl, sec-butyl, tert-butyl, 2-methylbutyl, pentyl, isoamyl, hexyl, cyclohexyl, 3-methylpentyl, octyl and the like. The term "alkylene", as used herein, relates to a bivalent radical alkyl group as defined above. For example, an alkyl group such as methyl which would be represented as -CH₃, becomes methylene, -CH₂-, when represented as an alkylene. Other alkylene groups should be understood accordingly.

The term "alkenyl", as used herein, relates to hydrocarbon radicals having one or several, such as up to 4, double bonds, which are straight, branched, cyclic or polycyclic moieties or combinations thereof and may contain from 2 to 18 carbon atoms, such as from 2 to 10 carbon atoms, such as from 2 to 8 carbon atoms, such as from 2 to 6 carbon atoms, or even from 2 to 4 carbon atoms. These radicals may be optionally substituted with a hydroxyl, chloro, bromo, iodo, cyano, nitro, -OR¹⁹, -OC(O)R²⁰, -C(O)R²¹, -C(O)OR²², -NR²³R²⁴, -C(O)NR²⁵R²⁶, -SR²⁷,-C(O)SR²⁷, -C(S)NR²⁵R²⁶, or aryl substituent, wherein R¹⁹ to R²⁷ each independently represent hydrogen, aryl or alkyl, and/or be interrupted by an oxygen or sulphur atom, or by silano or dialkylsiloxane group. Such radicals may be independently selected from alkenyl groups include vinyl, allyl, isopropenyl, pentenyl, hexenyl, heptenyl, cyclopropenyl, cyclobutenyl, cyclopentenyl, cyclohexenyl, 1-propenyl, 2-butenyl, 2-methyl-2-butenyl, isoprenyl, farnesyl, geranyl, geranylgeranyl and the like. The term "alkenylene", as used herein, relates to a bivalent radical alkenyl group as defined above. For example, an alkenyl group such as ethenyl which would be represented as -CH=CH₂, becomes ethenylene, -CH=CH-, when represented as an alkenylene. Other alkenylene groups should be understood accordingly.

The term "ar" or "aryl" as used herein, relates to an organic radical derived from an aromatic hydrocarbon by removal of one hydrogen, and includes any monocyclic, bicyclic or polycyclic carbon ring of up to 7 members in each ring, wherein a ring is aromatic. These radicals may be optionally substituted with a hydroxy, chloro, bromo, iodo, cyano, nitro, -OR¹⁹,-OC(O)R²⁰, -C(O)R²¹, -C(O)OR²², -NR²³R²⁴, -C(O)NR²⁵R²⁶, -SR²⁷, -C(O)SR²⁷, -C(S)NR²⁵R²⁶, or aryl substituent, wherein R¹⁹ to R²⁷ each independently represent hydrogen, aryl or lower alkyl, and/or be interrupted by an oxygen or sulphur atom, or by silano or dialkylsilicon groups. Such radicals may be independently selected from phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl or acenaphthyl and the like. The term "arylene", as used herein, relates to a bivalent radical aryl group as defined above. For example, an aryl group such as phenyl which would be represented as -Ph, becomes phenylene, -Ph-, when represented as an arylene. Other arylene groups should be understood accordingly.

For the avoidance of doubt, the reference to alkyl, alkenyl, aryl, aralkyl, or alkaralkyl in composite groups herein should be interpreted accordingly, for example the reference to alkyl in aminoalkyl or alk in alkoxyl should be interpreted as alk or alkyl above etc.

The rheological agent may be substantially free of castor oil and hydrogenated castor oil. As used herein "substantially free" means that the specified component (such as castor oil), if present, is present in trace amounts (i.e. less than 0.1 wt%, such as less than 0.01 wt%). The rheological agent may be completely free of castor oil and hydrogenated castor oil. The rheological agent may be substantially free of vegetable oils and hydrogenated vegetable oils. The rheological agent may be completely free of vegetable oils and hydrogenated vegetable oils. By "vegetable oils" or "castor oil", we are referring to triglycerides as opposed to, for example, free fatty acids.

Commercially available rheological agents based on hydrogenated castor oil include Luvotix(RTM) R and Luvotix(RTM) HT from Lehmann & Voss, Thixcin(RTM) R and Thixatrol(RTM) ST from Elementis, Crayvallac(RTM) MT and Flowtone(RTM) GR from Arkema, Rheocin(RTM) from BYK Altana Group, and Iscathix(RTM) ISP and Iscathix(RTM) T from ISCA. These rheological agents comprise at least 80 wt% of compounds having melting temperatures below 95°C.

The coating composition comprising a rheological agent is coated onto at least a portion of the substrate so as to provide a coating layer thereon. The coating layer may comprise a single coat of a coating composition. Alternatively, the coating layer may comprise two or more coats of a coating composition. The coating layer may comprise 2 or 3 coats of a coating composition. Each coat of the coating composition may be the same or different types of coating composition. The coating layer may comprise a primer layer and a topcoat layer. The coating layer may be formed by applying a coat of a coating composition as described herein to at least a portion of the substrate.

The coating layer may have any suitable thickness. The coating layer may have a dry film thickness of from 200 to 2000 µm, such as from 250 to 1000 µm, such as from 300 to 500 µm. When the coating layer is formed by applying a solvent based coating composition, the coating layer may have a dry film thickness of from 200 to 1000 µm, such as from 250 to 600 µm, such as from 300 to 500 µm.

The substrate may be any suitable substrate, such as a metal and/or concrete substrate. The metal substrate may comprise sheet steel; cast iron; aluminium; metal alloys such as alloys of aluminium or steel; nonferrous metals, such as brass, bronze and copper and combinations thereof. The substrate may comprise a steel substrate.

The substrate may be a tank or a pipe having an internal surface, and at least a portion of the internal surface is coated with the coating layer. The internal surface may comprise an internal steel surface. The substrate may comprise a tank or pipe comprising an internal steel surface. The tank or pipe may be any tank or pipe suitable for use in the chemical storage and transport industry.

The present invention may provide the use of a rheological agent in a coating composition to enhance chemical resistance of a coating layer formed by the coating composition when coated on at least a portion of a substrate, wherein the chemical resistance comprises resistance against continuous exposure to a fatty acid (such as PFAD) at a temperature of at least 60°C (such as 70°C) for a total of at least 6 months, wherein the rheological agent comprises at least 85 wt% of a diamide having a melting temperature of greater than 95°C.

The present invention may provide the use of a rheological agent in a coating composition to enhance chemical resistance of a coating layer formed by the coating composition when coated on at least a portion of a substrate, wherein the chemical resistance comprises resistance against continuous exposure to an organic solvent (such as an alcohol, such as methanol) at a temperature of at least 40°C for a total of at least 6 months, wherein the rheological agent comprises at least 85 wt% of a diamide having a melting temperature of greater than 95°C.

The present invention also provides a coating composition comprising a rheological agent, wherein the rheological agent comprises at least 85 wt% of a compound having a melting temperature of greater than 95°C.

The suitable features and advantages of the rheological agent comprised in the coating composition of the present invention are as described above in relation to the use.

The rheological agent may be present in the coating composition in any suitable amount. The rheological agent may be present in the coating composition in an amount of from 0.1 to 2.0 wt%, such as from 0.5 to 1.5 wt%, such as from 0.8 to 1.2 wt% based on the total solid weight of the coating composition.

The coating composition may comprise a binder resin. Any suitable binder resin may be used. Suitable binder resins are well known to the person skilled in the art. The binder resin may comprise an epoxy resin, an amine resin, a polyurethane resin, a polyurea resin, a vinyl ester resin, a polyolefin resin, or a combination thereof. The binder resin may comprise an epoxy resin, such as an epoxy novolac resin. The epoxy novolac resin may have a functionality of at least 3.0 and an epoxy equivalent weight below 190 g/eq. As used herein "functionality" means the number of epoxy groups per molecule. Epoxy equivalent weight is calculated by dividing the molecular weight of the molecule by its functionality (i.e. the number of epoxy groups per molecule).

The binder resin may be present in the coating composition in any suitable amount. The binder resin may be present in the coating composition in amounts of from 1 to 50 wt%, such as from 10 to 45 wt%, such as from 20 to 40 wt% based on the total solid weight of the coating composition.

The coating composition may comprise a curing agent. Any suitable curing agent may be used. Suitable curing agents are well known to the person skilled in the art. The curing agent may comprise a phenolic resin (or phenol-formaldehyde resin); amino resin; epoxy resin; isocyanate resin; beta-hydroxy (alkyl) amide resin; alkylated carbamate resin; polyacid; anhydride; organometallic acid-functional material; diamine, polyamine; diamide, polyamide and combinations thereof. The curing agent may comprise a diamine or a polyamine.

The curing agent may be present in the coating composition in any suitable amount. The curing agent may be present in the coating composition in amounts of from 1 to 50 wt%, such as from 5 to 30 wt%, such as from 5 to 15 wt% based on the total solid weight of the coating composition.

The coating composition may optionally contain an additive or combination of additives. Any suitable additive may be used. Suitable additives will be well known to the person skilled in the art. The additive may comprise a catalyst; pigment; surfactant; flow control agent; filler; diluent; organic solvent and combinations thereof.

Suitable catalysts will be well known to the person skilled in the art. The catalyst may comprise phosphoric acid; alkyl aryl sulphonic acid such as dodecyl benzene sulphonic acid; methane sulphonic acid; para-toluene sulphonic acid; dinonyl naphthalene disulphonic acid; phenyl phosphonic acid; tertiary amine-based hardener such as 2,4,6-tris(dimethylaminomethyl)phenol and formaldehyde, polymer with N1,N1-dimethyl-1,3-propanediamine and phenol, and combinations thereof. The catalyst, when present, may be used in the coating composition in any suitable amount. The catalyst, when present, may be used in amounts from 0.01 to 10 wt%, such as from 0.1 to 2 wt% based on the total solid weight of the coating composition.

Suitable pigments will be well known to the person skilled in the art. The pigment may comprise titanium dioxide or carbon black. The pigment, when present, may be used in the coating composition in any suitable amount. The pigment, when present, may be used in the coating composition in amounts of from 1 to 30 wt%, such as from 1 to 20 wt%, or even from 1 to 10 wt% based on the total solid weight of the coating composition.

Suitable fillers will be well known to the person skilled in the art. The filler may comprise talc or barium sulphate. The filler, when present, may be used in the coating composition in any suitable amount. The coating composition may comprise from 1 to 85 wt%, such as from 30 to 80 wt%, or even from 60 to 75 wt% of the filler (when present) based on the total solid weight of the coating composition.

Any suitable organic solvent may be used. The organic solvent may comprise: aliphatic hydrocarbon such as mineral spirit and high flash point naphtha; aromatic hydrocarbon such as benzene; toluene; xylene; solvent naphtha 100, 150, 200; those available from Exxon-Mobil Chemical Company under the SOLVESSO (RTM) trade name; alcohol such as ethanol; n-propanol; isopropanol; n-butanol; pentanol; amyl alcohol; 1-methoxy-2-propanol; and butoxy ethanol; ketone such as acetone; cyclohexanone; methylisobutyl ketone; methyl ethyl ketone; ester such as ethyl acetate; butyl acetate; n-hexyl acetate; RHODIASOLV (RTM) RPDE (a blend of succinic and adipic esters commercially available from Rhodia); glycol such as butyl glycol; glycol ether such as methoxypropanol; ethylene glycol monomethyl ether; ethylene glycol monobutyl ether; those available from Dow under the DOWANOL (RTM) trade name, such as DOWANOL PM, DOWANOL DPM and DOWANOL PPH, and combinations thereof.

The coating composition may comprise any suitable amount of solvent. The coating composition may comprise from 1 to 50 wt%, such as from 2 to 40 wt%, such as from 5 to 30 wt%, such as from 5 to 20 wt%, such as from 5 to 15 wt%, or even 10 wt% solvent based on the total weight of the coating composition. Alternatively, the coating composition may be solvent-free.

The coating composition may be prepared as a two component (2K) composition. Such compositions may be prepared immediately prior to coating of a substrate with the composition. The two component composition may be prepared by mixing a first component comprising a binder resin and a second component comprising a curing agent. The binder resin and curing agent may be as defined above. The rheological agent comprising at least 85 wt% of a compound having a melting temperature of greater than 95°C may be present in the first component and/or the second component. Optional additives, as described above, may also be present in the first component and/or the second component.

The coating composition may be substantially free of castor oil and hydrogenated castor oil. The coating composition may be completely free of castor oil and hydrogenated castor oil. The coating composition may be substantially free of vegetable oils and hydrogenated vegetable oils. The coating composition may be completely free of vegetable oils and hydrogenated vegetable oils.

The coating composition may comprise a commercial coating composition which is formulated with the rheological agent of the present invention. The commercial coating composition may comprise NovaGuard 840, NovaGuard 890, NovaGuard 260, SigmaLine 2000, PhenGuard(RTM) 930/935/940, PhenGuard(RTM) 965, and/or Amercoat(RTM) 253 from PPG Industries.

The present invention may provide a coating composition comprising:
a binder resin comprising an epoxy novolac resin;
a curing agent comprising a diamine or polyamine; and
a rheological agent comprising a diamide having a melting temperature of greater than 95°C in an amount of at least 85 wt% based on the total weight of the rheological agent.

The present invention also provides a substrate, wherein at least a portion of the substrate is coated with a coating layer formed by applying to the substrate a coating composition as described herein.

The present invention also provides a method of producing a substrate, wherein at least a portion of the substrate is coated with a coating layer, the method comprising the steps of:
(a) providing a coating composition as described herein; and
(b) applying the composition to at least a portion of the substrate to form a coating layer.

Suitable features of the substrate and method are described below.

The coating composition may be applied to the substrate using any known suitable application method. The application method may comprise spraying, brushing, and/or rolling.

The coating layer may comprise a single coat of the coating composition. Alternatively, the coating layer may comprise two or more coats of the coating composition. The coating layer may comprise 2 or 3 coats of the coating composition. Each coat of the coating composition may be the same or different types of the coating composition.

The coating layer may have any suitable thickness. The coating layer may have a dry film thickness of from 200 to 2000 µm, such as from 250 to 1000 µm, such as from 300 to 500 µm. When the coating layer is formed by applying a solvent based coating composition, the coating layer may have a dry film thickness of from 200 to 1000 µm, such as from 250 to 600 µm, such as from 300 to 500 µm.

The substrate may be any suitable substrate, such as a metal and/or concrete substrate. The metal substrate may comprise sheet steel; cast iron; aluminium; metal alloy such as an alloy of aluminium or steel; nonferrous metal, such as brass, bronze and copper and combinations thereof. The substrate may comprise a steel substrate.

The substrate may be a tank or a pipe having an internal surface, and at least a portion of the internal surface is coated with the coating layer. The internal surface may comprise an internal steel surface. The tank or pipe may be any tank or pipe suitable for use in the chemical storage and transport industry.

The substrate may comprise a steel substrate, such as a tank or pipe comprising an internal steel surface.

The present invention may provide a tank or pipe, wherein at least a portion of an internal surface of the tank or pipe is coated with a coating layer formed by applying to the substrate a coating composition as described herein.

The substrate of the present invention may be a tank or a pipe having an internal steel surface, wherein at least a portion of the internal surface is coated with a coating layer formed by applying to the internal surface a coating composition as described herein.

The present invention may provide a method of producing a tank or a pipe having an internal steel surface, wherein at least a portion of the internal surface is coated with a coating layer, the method comprising the steps of:
(a) providing a coating composition as described herein; and
(b) applying the composition to at least a portion of an internal steel surface of a tank or a pipe to form a coating layer.

The coated internal surface of the tank or pipe may define an internal space. The internal space may contain a chemical, such as an organic solvent (such as an alcohol, such as methanol) or a fatty acid (such as PFAD.) The coating layer has chemical resistance toward the said chemical.

The steel surface may comprise any suitable type of steel used for tank and pipe construction. The steel may comprise hot or cold rolled mild steel. A commercially available steel is Ympress(RTM) Laser E250C from Tata Steel.

The steel surface may be of any quality. At least a portion of the steel surface may be of a quality rated as Sa 1, Sa 2, Sa 2½ or Sa 3 (according to ISO standard 8501-1:2007(E)).

The steel surface may have a surface roughness prior to application of the coating composition of from 20 to 150 µm, such as a surface roughness of from 40 to 100 µm. The steel surface may have an Rz value of 50-75 µm and a peak count of 15-20 counts/cm (Psc value) as measured by Mitutoyo Surface Roughness Tester SJ-201P.

The steel surface may comprise grit blasted steel.

The present invention also provides a method to enhance (or increase) the chemical resistance of a coating layer on a substrate, the method comprising providing a coating composition comprising a rheological agent comprising at least 85 wt% of a compound having a melting temperature of greater than 95°C, and applying the coating composition to at least a portion of the substrate to provide the coating layer. Features of this method are as described above in relation to the use of the present invention.

As used herein, the singular includes the plural and plural encompasses singular, unless specifically stated otherwise. For example, the use of the singular, i.e. "a" or "an", includes "one or more". In addition, as used herein, the use of "or" means "and/or" unless specifically stated otherwise, even though "and/or" may be explicitly used in certain instances.

As used herein, unless otherwise expressly specified, all numbers such as those expressing values, ranges, amounts or percentages may be read as if prefaced by the word "about", even if the term does not expressly appear. Also, any numerical range recited herein is intended to include all sub-ranges subsumed therein. When ranges are given, any endpoints of those ranges and/or numbers within those ranges can be combined within the scope of the present invention. Including and like terms means "including but not limited to".

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention. When referring to compositions, a composition consisting essentially of a set of components may comprise less than 5% by weight, such as less than 3% by weight, such as less than 1% by weight of non-specified components.

The term "consisting of" or "consists of" means including the components specified but excluding addition of other components.

Whenever appropriate, depending upon the context, the use of the term "comprises" or "comprising" may also be taken to encompass or include the meaning "consists essentially of" or "consisting essentially of", and may also be taken to include the meaning "consists of" or "consisting of".

For the avoidance of doubt, where amounts of components in a composition are described in wt%, this means the weight percentage of the specified component in relation to the whole composition referred to. Thus, "wherein the coating composition comprises less than 0.1 wt% of castor oil" means that less than 0.1 wt% of the coating composition is provided by castor oil.

The optional features set out herein may be used either individually or in combination with each other where appropriate and particularly in the combinations as set out in the accompanying claims. The optional features for each aspect or exemplary embodiment of the invention as set out herein are also to be read as applicable to any other aspect or exemplary embodiments of the invention, where appropriate. In other words, the skilled person reading this specification should consider the optional features for each exemplary embodiment of the invention as interchangeable and combinable between different exemplary embodiments.

For a better understanding of the invention, and to show how embodiments of the same may be carried into effect, reference will now be made, by way of example, to the following experimental data.

### Examples

### Example 1 (Comparative)

The following materials and coating compositions were prepared, applied and tested as follows:
As test substrates steel panels were used (Ympress(RTM) Laser E250C from Tata Steel) that had been grit blasted to Sa 2½ and a roughness of Rz = 50-75 µm.

Paint preparation: A commercially available novolac epoxy/amine cured solvent based tank coating system was formulated with a commercially available rheological agent based on hydrogenated castor oil (i.e. wherein the rheological agent comprises at least 80 wt% of hydrogenated castor oil). The rheological agents were incorporated into the coating composition/paint according to the instructions from the suppliers for optimal activation. The rheological agent was present in the coating composition in an amount of 0.95 wt% based on the total solid weight of the composition.

Paint application: The paints were mixed according the instructions on the product datasheets. Using air spray equipment the paints were applied onto the substrate in two coats of 150 µm dry film thickness with an overcoating interval of 2 days at 20-23°C. The coating system was cured for 3 weeks at 20-23°C.

Test medium 1: tests were performed in palm fatty acid distillate obtained from Loders Croklaan in the Netherlands with the code PFAD XB165R. The palm fatty acid distillate was heated to 70°C and mixed with 5 wt% water, making the chemical mixture more aggressive towards the epoxy-based coating, with the aim to shorten the test duration and observe differences in resistance of the different coatings within a reasonable period of time.

Test medium 2: tests were performed in methanol, purchased from Avantor (GPR Rectapur ≥99.5%). The methanol was kept at 40°C for immersion of test panels.

Test method: The chemical resistance was tested by immersion of coated test panels in the test media 1 and 2 separately in accordance with ISO 2812-1:2007 for a period of 6 months. The coatings were inspected every month for defects like blistering, swelling, delamination, and loss of adhesion.

Evaluation: The time to failure of the coating was used as a measure for its performance. The coating was considered to be acceptable if it remained intact for at least 26 weeks (6 months).

### Results:

| Rheological additive | Time-to-failure (weeks) in Palm fatty acid distillate + 5% water @ 70°C (Test medium 1) | Score PFAD | Time-to-failure (weeks) in methanol @ 40°C (Test medium 2) | Score Methanol | Overall score |
|---|---|---|---|---|---|
| | | | | | PFAD and methanol |
| Luvotix^{®} R | 8-12 weeks | Not ok | >26 weeks | OK | Not ok |
| Thixcin^{®} R | < 4 weeks | Not ok | >26 weeks | OK | Not ok |
| Thixatrol^{®} ST | < 4 weeks | Not ok | >26 weeks | OK | Not ok |
| Crayvallac^{®} MT | < 4 weeks | Not ok | >26 weeks | OK | Not ok |
| None | >26 weeks | ok | < 2 weeks | Not ok | Not ok |

### Example 2

Paint preparation: A commercially available novolac epoxy/amine cured solvent based tank coating system was formulated with a commercially available rheological agent based on diamide(s). Examples of commercially available diamide-based rheological agents are provided herein. The rheological agents A, B, D and E were present in the coating composition in an amount of 0.9 wt% based on the total solid weight of the coating composition. The rheological agents C and F were present in the coating composition in an amount of 1.1 wt% based on the total solid weight of the coating composition.

The diamide-based rheological additives were characterized by their melting points (melting trajects). This was done with Differential Scanning Calorimetry. A specimen of the sample was sealed in an aluminum hermetic pan with a 75 µm laser-drilled pinhole lid and scanned in a TAI Discovery DSC using the below method:
- Ramp from -75 to 200°C at 10°C/min
- Ramp from 200 to -75°C at 10°C/min
- Ramp from -75 to 170°C at 10°C/min

The DSC was calibrated with indium, tin, and zinc standards, and the nominal nitrogen purge rate was 50 mL/min. The peak area was calculated using a linear baseline. An estimation of the ratio between the fractions with different melting points was calculated by dividing the enthalpy per gram of each of the fractions.

Paint preparation, paint application, test medium, test method and evaluation were performed in the same way as described in Example 1.

### Results - Test Medium 1:

| Diamide rheological additive | Melting points (Mp) from DSC analysis | | Enthalpy (J/g) | | Estimated wt% | | Time-to-failure (weeks) in palm fatty acid distillate + 5% water @ 70°C | Score |
|---|---|---|---|---|---|---|---|---|
| | Low Mp | High Mp | Low Mp | High Mp | Low Mp | High Mp | | |
| | | | | | | | | |
| A | 108°C | 146°C | 5 | 129 | 4 | 96 | >26 weeks | Pass |
| B | 94°C | 119°C | 10 | 76 | 12 | 88 | >26 weeks | Pass |
| C | 66°C | 117°C | 5.3 | 94 | 5 | 95 | >26 weeks | Pass |
| D | 93°C | 128°C | 20 | 87 | 19 | 81 | 8-12 weeks | Fail |
| E | 94°C | 128°C | 25 | 90 | 22 | 78 | 8-12 weeks | Fail |
| F | 94°C | 128°C | 17 | 92 | 16 | 84 | 8-12 weeks | Fail |

The results above show that the melting point of the rheological agent is an important factor for resistance of the coating to hot palm fatty acid distillate. When at least 85 wt% of the rheological agent has a melting point far above the operating and test temperature of the palm fatty acid distillate, the coating shows long term resistance. A low percentage (<15 wt%) of a component with a lower melting point is acceptable and still provides resistance to the coating. However, when a component having a lower melting point is present in an amount above about 15 wt%, the resistance against palm fatty acid distillate is insufficient.

### Results - Test Medium 2:

| Diamide rheological additive | Time-to-failure (weeks) in methanol @ 40°C | Score |
|---|---|---|
| A | < 4 weeks | Not OK |
| B | >26 weeks | OK |
| C | >26 weeks | OK |
| D | >26 weeks | OK |
| E | >26 weeks | OK |
| F | >26 weeks | OK |

The results of Example 2 are summarised as follows:

| Bis-amide rheological additive | Score PFAD | Score Methanol | Overall score |
|---|---|---|---|
| | (Test Medium 1) | (Test Medium 2) | PFAD and methanol |
| A | OK | Not OK | Not OK |
| B | OK | OK | OK |
| C | OK | OK | OK |
| D | Not OK | OK | Not OK |
| E | Not OK | OK | Not OK |
| F | Not OK | OK | Not OK |

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

Whereas particular examples of this invention have been described above for purposes of illustration, it will be evident to those skilled in the art that numerous variations of the details of the present invention may be made without departing from the invention as defined in the appended claims.

## Claims

1. Use of a rheological agent in a coating composition to enhance chemical resistance of a coating layer formed by the coating composition when coated on at least a portion of a substrate, wherein the rheological agent comprises at least 85 wt% of a compound having a melting temperature of greater than 95°C.

2. The use according to claim 1, wherein the chemical resistance is determined in accordance with ISO 2812-1:2007.

3. The use according to claim 1 or claim 2, wherein the rheological agent enhances chemical resistance of the coating layer against long term exposure to, and/or repeated cycling of, a chemical, such as wherein the rheological agent enhances chemical resistance of the coating layer such that the coating layer remains intact after a total of at least 6 months of continuous exposure to a chemical.

4. The use according to any preceding claim, wherein the rheological agent enhances chemical resistance to the coating layer by providing chemical resistance against a fatty acid, such as palm fatty acid distillate (PFAD), and against an organic solvent, such as methanol.

5. The use according to any preceding claim, wherein the rheological agent enhances chemical resistance to the coating layer by providing chemical resistance against a fatty acid at a temperature of at least 60°C and against an organic solvent at a temperature of at least 40°C.

6. The use according to any preceding claim, wherein the rheological agent comprises a thixotropic agent.

7. The use according to any preceding claim, wherein the compound having a melting temperature of greater than 95°C comprises a compound comprising at least two amide groups, such as wherein the compound comprising at least two amide groups comprises a diamide.

8. The use according to any preceding claim, wherein the rheological agent is substantially free of castor oil and/or hydrogenated castor oil.

9. The use according to any preceding claim, wherein the substrate comprises a steel substrate, such as a tank or pipe comprising an internal steel surface.

10. A coating composition comprising a rheological agent, wherein the rheological agent comprises at least 85 wt% of a compound having a melting temperature of greater than 95°C, such as wherein the rheological agent comprises a thixotropic agent.

11. The composition according to claim 10, wherein the rheological agent comprises a compound comprising at least two amide groups, such as wherein the compound comprising at least two amide groups comprises a diamide.

12. The composition according to claim 10 or claim 11, wherein the composition is substantially free of castor oil and/or hydrogenated castor oil.

13. A substrate, wherein at least a portion of the substrate is coated with a coating layer formed by applying to the substrate a coating composition according to any one of claims 10 to 12, such as wherein the substrate comprises a steel substrate, such as a tank or pipe comprising an internal steel surface.

14. A tank or pipe, wherein at least a portion of an internal surface of the tank or pipe is coated with a coating layer formed by applying to the substrate a coating composition according to any one of claims 10 to 12.

15. A method of producing a substrate coated on at least a portion thereof with a coating layer, the method comprising the steps of:
(a) providing a coating composition according to any one of claims 10 to 12; and
(b) applying the composition to at least a portion of a substrate to form a coating layer.
